# EUROPEAN PATENT APPLICATION

(11) **EP 4 759 698 A1**
(43) Date of publication of application: **17.06.2026**
(21) Application number: 23948584.0
(22) Date of filing: 23.08.2023
(51) Int. Cl.: B63B 35/44, B63J 3/04, B63H 21/18

(54) **OFFSHORE PLATFORM ALLOWING CARBON NEUTRAL FUEL TO BE PRODUCED, STORED AND SUPPLIED, OVERCOMING INTERMITTENTCY OF RENEWABLE ENERGY**

(30) Priority: 09.08.2023 KR 20230104138
(71) Applicant: Korea Institute of Ocean Science and Technology, Busan 49111 (KR)
(72) Inventor: KANG, Hee Jin, Gyeryong-si, Chungcheongnam-do 32837 (KR); SONG, Tae Bong, Sejong 30104 (KR); HONG, Jang Pyo, Daejeon 34686 (KR)
(74) Representative: EP&C
(86) International application number: PCT/KR2023/012465
(87) International publication number: WO 2025/033590

(57) **Abstract**

The present invention relates to an offshore platform allowing carbon neutral fuel to be produced, stored and supplied, overcoming intermittency of renewable energy, the offshore platform comprising: a main body located offshore; a hydrogen production unit, disposed in the main body, for producing hydrogen via sea water electrolysis using a water electrolysis device and storing the hydrogen; an ammonia production unit, disposed in the main body, for synthesizing, via a first synthesis device, the hydrogen flowing in from the hydrogen production unit with nitrogen in the air to produce ammonia and storing same; a carbon dioxide storage unit, disposed in the main body, for storing carbon dioxide flowing in from the ship; and a methanol production unit, disposed in the main body, for synthesizing, by means of a second synthesis device, the carbon dioxide flowing in from the carbon dioxide storage unit and hydrogen flowing in from the hydrogen production unit to produce methanol and storing same.

## Description

### Technical Field

The present invention relates to an offshore platform, and more particularly, to an offshore platform allowing carbon-neutral fuel to be produced, stored, and supplied, overcoming intermittency of renewable energy. The offshore platform is configured to produce carbon-neutral fuel by utilizing renewable energy together with idle power generated by land-based power generation devices and carbon dioxide captured from exhaust gases emitted from general ships. Accordingly, the present invention makes it possible to overcome instability in carbon-neutral fuel production caused by intermittency inherent in renewable energy sources. In addition, the present invention enables a reduction in production costs of carbon-neutral fuel, facilitates a reduction in air pollution caused by greenhouse gas emissions from general ships, and allows smooth utilization of carbon dioxide captured during operation of general ships. Therefore, the present invention provides an offshore platform capable of producing, storing, and supplying carbon-neutral fuel while effectively overcoming intermittency of renewable energy.

### Background Art

In general, ships use heavy fuel oil or liquefied natural gas (LNG) as fuel, and accordingly, a large amount of exhaust gas is inevitably emitted during a fuel combustion process.

At this time, exhaust gases emitted from ships not only cause air pollution but also particularly induce a greenhouse effect, thereby contributing to global warming.

For these reasons, regulations on ship exhaust emissions are being increasingly strengthened.

Under such circumstances, as disclosed in, for example, Korean Patent Registration No. 10-2531551, some ships capture a portion of gases emitted during a fuel combustion process, such as carbon dioxide, in order to reduce greenhouse gas emissions.

However, since internal space of a ship is limited, there has been a problem in that gas capture is subject to significant limitations.

In addition, as regulations on ship exhaust emissions are being increasingly strengthened, the number of ships using carbon-neutral fuels such as green methanol is increasing.

However, production of carbon-neutral fuel has involved a problem in that a substantial cost is required. In particular, when carbon-neutral fuels such as methanol are produced and stored on land in areas adjacent to residential zones, there is a risk that accidents such as fire or explosion may occur, which may lead to especially large-scale casualties.

However, production of carbon-neutral fuel has involved a problem in that a substantial cost is required. In particular, when carbon-neutral fuels such as methanol are produced and stored on land in areas adjacent to residential zones, there is a risk that accidents such as fire or explosion may occur, which may lead to especially large-scale casualties.

However, when operating an offshore platform for the purpose of producing carbon-neutral fuel, there has been a significant problem in that considerable costs are incurred due to power supply and the like.

Meanwhile, carbon-neutral fuels such as hydrogen, ammonia, and methanol may be produced by utilizing renewable energy sources such as solar power or wind power.

However, renewable energy sources inherently have intermittency due to variability of solar irradiation or wind conditions. Accordingly, for water electrolysis-based hydrogen production and synthesis of ammonia and methanol using solar power or wind power, large-scale energy storage systems (ESS), which collect intermittent energy and supply power at a constant output, are required. As a result, not only does a substantial cost arise from providing such large-scale energy storage systems, but there is also a problem in that double or triple energy losses occur during an energy storage process in the energy storage systems and subsequent carbon-neutral fuel production processes. In particular, in the case of offshore wind power and offshore solar power, there are technical and economic difficulties in interconnection with an onshore power grid, and thus there is a need to secure appropriate applications or utilization paths capable of consuming the generated power.

In addition, among carbon-neutral fuels, hydrogen produced by electrolysis must be stored either by being compressed to approximately 700 bar or by being liquefied through cooling to about -253°C. As a result, due to a high boil-off rate (BOR) and the like, there has been a problem in that large-scale storage and long-term storage are difficult, and enormous costs are required.

Further, in order to realize marine carbon neutrality, when greenhouse gases emitted from ships are captured through an onboard carbon capture system (OCCS), there has been a problem in that there are few practical utilization options for the captured carbon other than storing the same underground, thereby delaying technological development and commercialization.

For the above reasons, in the relevant field, attempts have been made to develop an offshore platform capable of overcoming instability in carbon-neutral fuel production caused by intermittency of renewable energy, reducing production costs of carbon-neutral fuel, reducing air pollution caused by greenhouse gas emissions from general ships, and enabling smooth utilization of carbon dioxide captured during operation of general ships. However, to date, satisfactory results have not yet been achieved.

### [Prior Art]

### [Patent Documents]

(Patent Document 1) Korean Patent Registration No. 10-2531551

### Disclosure

### Technical Problem

The present invention has been proposed to solve the problems of the related art as described above, and an object of the present invention is to provide an offshore platform capable of eliminating instability in carbon-neutral fuel production caused by intermittency of renewable energy when carbon-neutral fuel is produced using renewable energy.

In addition, an object of the present invention is to provide an offshore platform capable of reducing costs incurred in that large-scale high-pressure tanks or cryogenic tanks must be provided and operated in order to store hydrogen produced when hydrogen, which is one of carbon-neutral fuels, is produced.

In addition, an object of the present invention is to provide an offshore platform capable of reducing inconvenience caused by a need to seek land-based facilities for processing carbon captured during operation of general ships.

In addition, an object of the present invention is to provide an offshore platform capable of stably supplying carbon-neutral fuel, that is, bunkering carbon-neutral fuel, to ships operating offshore.

### Technical Solution

In order to achieve the above-described objects, the present invention proposes,
an offshore platform allowing carbon-neutral fuel to be produced, stored, and supplied, overcoming intermittency of renewable energy, the offshore platform comprising: a main body located offshore; a hydrogen production unit, disposed in the main body, for producing hydrogen by electrolyzing seawater using a water electrolysis device and storing the hydrogen; an ammonia production unit, disposed in the main body, for synthesizing, via a first synthesis device, the hydrogen flowing in from the hydrogen production unit with nitrogen in air to produce ammonia and storing the ammonia; a carbon dioxide storage unit, disposed in the main body, for storing carbon dioxide flowing in from a ship; and a methanol production unit, disposed in the main body, for synthesizing, via a second synthesis device, the carbon dioxide flowing in from the carbon dioxide storage unit and the hydrogen flowing in from the hydrogen production unit to produce methanol and storing the methanol.

### Advantageous Effects

The offshore platform according to the present invention, which allows carbon-neutral fuel to be produced, stored, and supplied while overcoming intermittency of renewable energy, may include, in a power supply unit, a wind power generation device and a solar power generation device, and may also be connected to a land-based power generation device. Accordingly, carbon-neutral fuel may be produced by utilizing renewable energy generated by wind power and solar power, and idle power from the land-based power generation device may also be utilized. As a result, power supply can be performed in a stable manner, thereby overcoming intermittency inherent in renewable energy. Consequently, not only can production of carbon-neutral fuel be stably performed, but production costs of carbon-neutral fuel can also be reduced.

In addition, the offshore platform according to the present invention, which allows carbon-neutral fuel to be produced, stored, and supplied while overcoming intermittency of renewable energy, enables ammonia and methanol to be produced immediately through synthesis of hydrogen produced in the hydrogen production unit. Accordingly, since it is not necessary to provide large-scale high-pressure tanks or cryogenic tanks for storing hydrogen, costs incurred in providing and operating such large-scale high-pressure tanks or cryogenic tanks can be reduced.

In addition, the offshore platform according to the present invention, which allows carbon-neutral fuel to be produced, stored, and supplied while overcoming intermittency of renewable energy, is capable of receiving and unloading carbon captured during operation of general ships and producing methanol by reacting the carbon with hydrogen. Accordingly, not only can utilization efficiency of carbon captured during operation of general ships be enhanced, but inconvenience caused by a need to seek land-based facilities for processing carbon captured during operation of general ships can also be reduced.

In addition, the offshore platform according to the present invention, which allows carbon-neutral fuel to be produced, stored, and supplied while overcoming intermittency of renewable energy, is provided with a berthing facility for berthing a ship on the main body, and a connecting member is provided at the berthing facility. Accordingly, by means of the connecting member, inflow of carbon dioxide from the ship to the carbon dioxide storage unit, inflow of hydrogen from the hydrogen production unit to the ship, inflow of ammonia from the ammonia production unit to the ship, and inflow of methanol from the methanol production unit to the ship can be easily performed.

In addition, the offshore platform according to the present invention, which allows carbon-neutral fuel to be produced, stored, and supplied while overcoming intermittency of renewable energy, may have a main body configured as any one of a fixed offshore plant, a floating offshore plant, and a ship in the form of an FPSO (Floating Production Storage and Off-loading). The ship in the form of an FPSO may be a nuclear-powered ship comprising: a reactor configured to generate steam by thermal energy produced in a nuclear fission process; and a turbine installed in connection with the reactor and configured to rotate by impulse force and reaction force when impinged by the steam. The nuclear-powered ship may further comprise a gyrostabilizer in addition to the reactor and the turbine, and in particular, the turbine may be mounted on a spin axis of the gyrostabilizer. Accordingly, rotational force of the turbine rotated by the steam generated in the reactor is transmitted to the spin axis of the gyrostabilizer, thereby causing a rotor to rotate and perform precession. As a result, twisting and tilting of the main body can be suppressed, and thus restoring stability of the main body can be improved.

### Description of Drawings

FIG. 1 is a schematic view illustrating a structure of an offshore platform capable of producing, storing, and supplying carbon-neutral fuel while overcoming intermittency of renewable energy according to the present invention.
FIG. 2 is an exemplary view illustrating supply of hydrogen from the offshore platform to a ship according to the present invention.
FIG. 3 is an exemplary view illustrating supply of ammonia from the offshore platform to a ship according to the present invention.
FIG. 4 is an exemplary view illustrating supply of methanol from the offshore platform to a ship according to the present invention.
FIG. 5 is an exemplary view illustrating inflow of carbon dioxide from a ship to a carbon dioxide storage unit in the offshore platform according to the present invention.
FIG. 6 is an exemplary view illustrating power supply through a power supply unit in the offshore platform according to the present invention.
FIG. 7 is another exemplary view illustrating power supply through the power supply unit in the offshore platform according to the present invention.
FIG. 8 is an exemplary view illustrating a structure of a connecting member in the offshore platform according to the present invention.
FIG. 9 is an exemplary view illustrating an internal structure of the offshore platform when a main body is a nuclear-powered ship according to the present invention.
FIG. 10 is a schematic view illustrating a structure of a gyrostabilizer applied when the main body of the offshore platform is a nuclear-powered ship according to the present invention.
FIG. 11 is a related graph for explaining overcoming intermittency of renewable energy in the offshore platform according to the present invention.

### Best Mode

Hereinafter, the present invention will be described in detail with reference to the accompanying drawings.

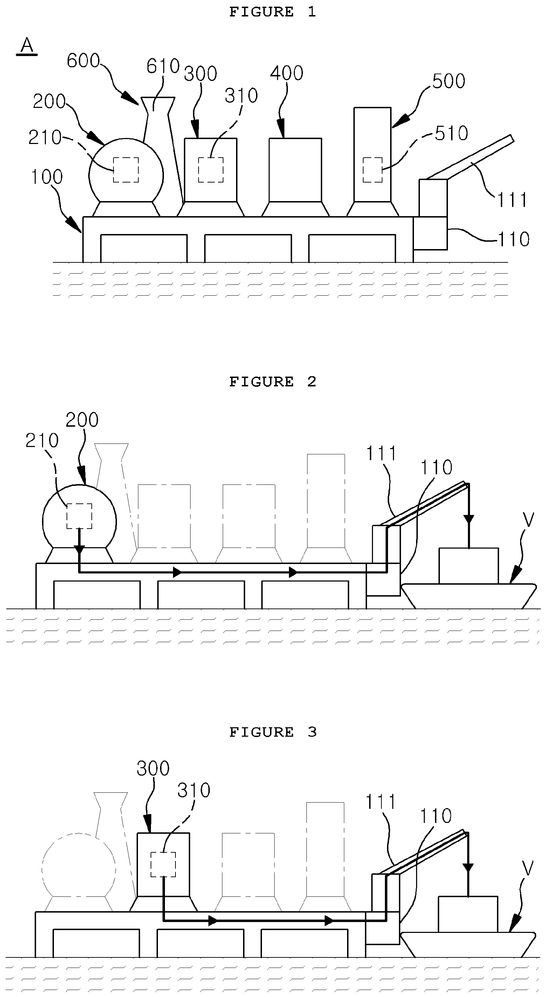

As illustrated in FIG. 1, an offshore platform (A) capable of producing, storing, and supplying carbon-neutral fuel while overcoming intermittency of renewable energy according to the present invention comprises a main body (100); a hydrogen production unit (200); an ammonia production unit (300); a carbon dioxide storage unit (400); and a methanol production unit (500).

The main body (100) of the present invention is located offshore.

Accordingly, by disposing a hydrogen production unit (200), an ammonia production unit (300), a carbon dioxide storage unit (400), and a methanol production unit (500) in the main body (100), production of hydrogen, ammonia, and methanol can be performed offshore, and storage of carbon dioxide flowing in from a ship (V) berthed to the main body (100) can also be performed.

At this time, the main body (100) includes a berthing facility (110), such that berthing of the ship (V) can be stably performed by the berthing facility (110).

Further, the berthing facility (110) includes a connecting member (111) extending from any one of the hydrogen production unit (200), the ammonia production unit (300), the carbon dioxide storage unit (400), and the methanol production unit (500) to the ship (V). Accordingly, by means of the connecting member (111), any one of supply of hydrogen from the hydrogen production unit (200) to the ship (V), supply of ammonia from the ammonia production unit (300) to the ship (V), inflow of carbon dioxide from the ship (V) to the carbon dioxide storage unit (400), and supply of methanol from the methanol production unit (500) to the ship (V) can be easily performed.

Here, the connecting member (111) includes a support (111a) fixedly installed on the main body (100); a wire (111b) extending from the support (111a) to the ship (V); a hose (111c) slidably coupled to the wire (111b); and a tensioner (111d) configured to adjust tension of the wire (111b). Accordingly, by pushing or pulling the hose (111c) mounted on the wire (111b) to connect the hose (111c) between the ship (V) and the main body (100), any one of supply of hydrogen from the hydrogen production unit (200) to the ship (V), supply of ammonia from the ammonia production unit (300) to the ship (V), inflow of carbon dioxide from the ship (V) to the carbon dioxide storage unit (400), and supply of methanol from the methanol production unit (500) to the ship (V) can be stably performed.

Meanwhile, the main body (100) may be configured as any one of a fixed offshore plant, a floating offshore plant, and a ship in the form of an FPSO (Floating Production Storage and Off-loading).

In this case, the ship in the form of an FPSO may be a nuclear-powered ship comprising: a reactor (120) disposed in a hull of the ship and configured to generate steam by thermal energy produced in a nuclear fission process; and a turbine (130) disposed in the hull and operatively connected to the reactor (120), the turbine (130) being configured to rotate by impulse force and reaction force when impinged by the steam.

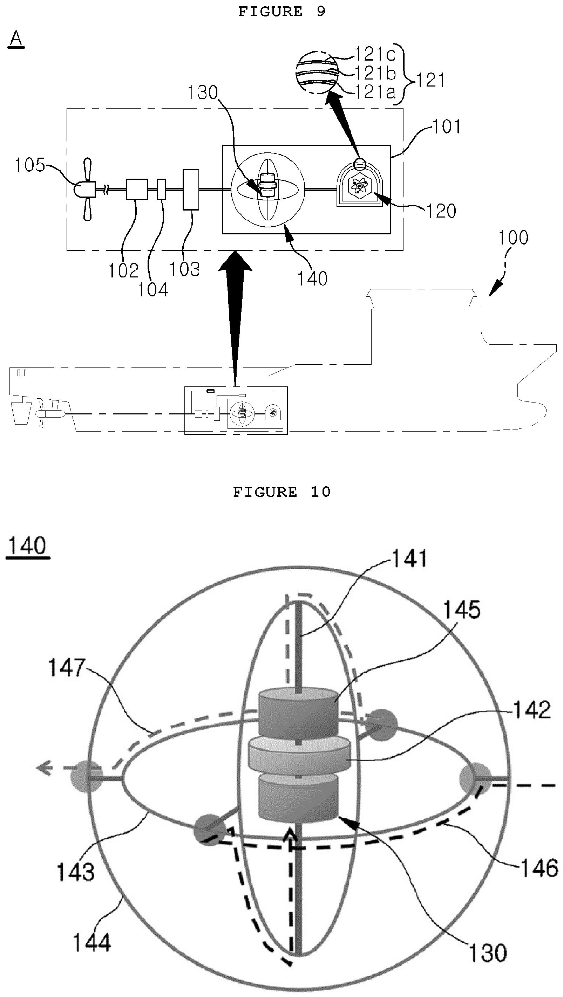

Here, the ship in the form of an FPSO (Floating Production Storage and Off-loading) includes, as illustrated in FIG. 10, a gyrostabilizer (140) disposed in a hull of the ship and configured to suppress tilting of the hull through precession motion. The gyrostabilizer (140) includes a rotor (142) rotating about a spin axis (141), a gimbal (143) rotatably supporting the spin axis (141), and a frame (144) rotatably supporting the gimbal (143). Accordingly, by suppression of tilting of the hull by the gyrostabilizer (140), restoring stability of the ship during operation can be improved.

Further, in the ship in the form of an FPSO (Floating Production Storage and Off-loading), the turbine (130) is mounted on the spin axis (141) of the gyrostabilizer (140).

Accordingly, rotation of the turbine (130) causes the spin axis (141) of the gyrostabilizer (140) and the rotor (142) supported thereby to rotate, so that precession motion of the gyrostabilizer (140) can be performed.

In addition, in the ship in the form of an FPSO, the gyrostabilizer (140) includes a generator (145) mounted on the spin axis (141). As the spin axis (141) and the rotor (142) are rotated by the turbine (130), the generator (145) is operated, thereby enabling power generation.

Further, in the ship in the form of an FPSO (Floating Production Storage and Off-loading), the gyrostabilizer (140) includes a steam inlet line (146).

In this case, the steam inlet line (146) extends from the reactor (120) to the turbine (130) via the frame (144) and the gimbal (143), such that steam generated in the reactor (120) flows into the turbine (130) through the steam inlet line (146), thereby causing rotation of the turbine (130).

Further, in the ship in the form of an FPSO (Floating Production Storage and Off-loading), the gyrostabilizer (140) includes a power supply line (147).

In this case, the power supply line (147) extends from the generator (145) to a propulsion motor (102) of the hull via the gimbal (143) and the frame (144), such that electric power generated by the generator (145) is supplied to the propulsion motor (102). As a result, rotation of a rotation shaft of the propulsion motor (102) is performed, and accordingly, a propeller (105) coupled to the rotation shaft of the propulsion motor (102) is rotated, thereby enabling propulsion of the hull.

Here, a switchboard (103) and an inverter/converter (104) are provided between the power supply line (147) provided in the gyrostabilizer (140) and the propulsion motor (102) of the hull, such that power distribution can be performed by the switchboard (103) and power conversion can be performed by the inverter/converter (104).

Further, in the ship in the form of an FPSO (Floating Production Storage and Off-loading), the reactor (120) is surrounded by a shielding member (121), thereby preventing leakage of radiation. In addition, the gyrostabilizer (140) is disposed together with the reactor (120) in a separate closed room (101) within the hull, such that access thereto can be restricted.

The hydrogen production unit (200) of the present invention is disposed in the main body (100) and produces and stores hydrogen by electrolyzing seawater using a water electrolysis device (210).

Accordingly, by supplying the hydrogen produced in the hydrogen production unit (200) to a ship (V) berthed to the main body (100), the ship (V) can be operated using hydrogen as fuel. In addition, by allowing the hydrogen produced in the hydrogen production unit (200) to flow into the ammonia production unit (300) and synthesizing the hydrogen with nitrogen in air, ammonia can be produced.

Meanwhile, in the hydrogen production unit (200), the water electrolysis device (210) may have any conventional structure and operate in any conventional manner, as long as it is capable of producing hydrogen by electrolyzing seawater, and thus a detailed description of the water electrolysis device (210) will be omitted.

The ammonia production unit (300) of the present invention is disposed in the main body (100) and produces and stores ammonia by synthesizing hydrogen flowing in from the hydrogen production unit (200) with nitrogen in air via a first synthesis device (310).

Accordingly, by supplying the ammonia produced in the ammonia production unit (300) to a ship (V) berthed to the main body (100), the ship (V) can be operated using ammonia as fuel.

Meanwhile, in the ammonia production unit (300), the first synthesis device (310) may have any conventional structure and operate in any conventional manner, as long as it is capable of synthesizing hydrogen with nitrogen in air to produce ammonia, and thus a detailed description of the first synthesis device (310) will be omitted.

The carbon dioxide storage unit (400) of the present invention is disposed in the main body (100) and stores carbon dioxide flowing in from a ship (V).

Accordingly, a ship (V) that has captured carbon dioxide during operation may berth to the main body (100) and discharge the carbon dioxide into the carbon dioxide storage unit (400), such that the captured carbon dioxide can be processed in a simple manner without the need to seek facilities such as ports. In addition, further capture of carbon dioxide can be performed during subsequent operation of the ship. Further, by allowing the carbon dioxide stored in the carbon dioxide storage unit (400) to flow into the methanol production unit (500) and synthesizing the carbon dioxide with hydrogen produced in the hydrogen production unit (200), methanol can be produced.

The methanol production unit (500) of the present invention is disposed in the main body (100) and produces and stores methanol by synthesizing carbon dioxide flowing in from the carbon dioxide storage unit (400) with hydrogen flowing in from the hydrogen production unit (200) via a second synthesis device (510).

Accordingly, by supplying the methanol produced in the methanol production unit (500) to a ship (V) berthed to the main body (100), the ship (V) can be operated using methanol as fuel.

Meanwhile, in the methanol production unit (500), the second synthesis device (510) may have any conventional structure and operate in any conventional manner, as long as it is capable of synthesizing carbon dioxide with hydrogen to produce methanol, and thus a detailed description of the second synthesis device (510) will be omitted.

Further, the offshore platform (A) capable of producing, storing, and supplying carbon-neutral fuel while overcoming intermittency of renewable energy according to the present invention further comprises a power supply unit (600).

The power supply unit (600) of the present invention supplies power to each of the hydrogen production unit (200), the ammonia production unit (300), the carbon dioxide storage unit (400), and the methanol production unit (500).

In this case, the power supply unit (600) may supply power produced by a power generation device (610) disposed in the main body (100).

Here, the power generation device (610) may have any conventional structure and operate in any conventional manner, as long as it is capable of generating power, and examples thereof may include any one of a nuclear power generation device, a wind power generation device, and a solar power generation device.

In addition, the power supply unit (600) may be connected to a land-based power generation device (610).

Accordingly, as idle power from the land-based power generation device (610) is supplied through the power supply unit (600), operation of the hydrogen production unit (200), the ammonia production unit (300), the carbon dioxide storage unit (400), and the methanol production unit (500) can be performed.

The offshore platform (A) capable of producing, storing, and supplying carbon-neutral fuel while overcoming intermittency of renewable energy according to the present invention can reduce inconvenience associated with processing carbon dioxide captured from exhaust gases emitted during operation of general ships (V) using heavy fuel oil or liquefied natural gas (LNG) as fuel. A detailed description thereof will be provided below.

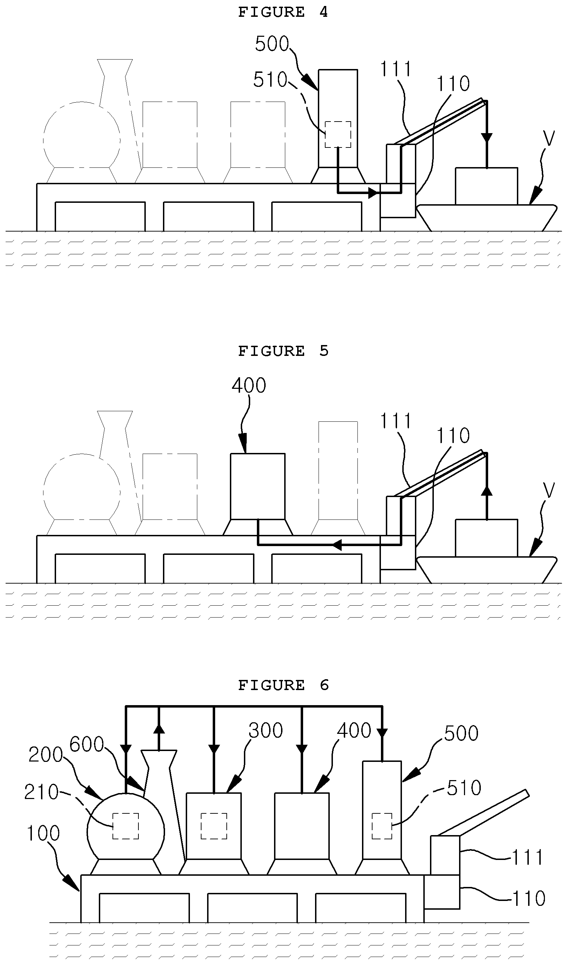

That is, the present invention includes a carbon dioxide storage unit (400) disposed in the main body (100). As illustrated in FIG. 5, after a general ship (V) that has captured carbon dioxide during operation berths to the main body (100), the captured carbon dioxide can be discharged into the carbon dioxide storage unit (400). Accordingly, the captured carbon dioxide can be processed in a simple manner without the need to seek facilities such as ports, and further capture of carbon dioxide can be performed during subsequent operation of the ship.

At this time, the main body (100) includes a berthing facility (110), such that berthing of the ship (V) can be stably performed by the berthing facility (110).

Further, carbon dioxide stored in the carbon dioxide storage unit (400) is used for methanol production through synthesis with hydrogen, as will be described below. Accordingly, utilization efficiency of carbon dioxide captured during operation of general ships can be enhanced.

In addition, the offshore platform (A) capable of producing, storing, and supplying carbon-neutral fuel while overcoming intermittency of renewable energy according to the present invention enables production of carbon-neutral fuel. A detailed description thereof will be provided below.

First, the offshore platform (A) according to the present invention is capable of producing hydrogen in particular.

That is, a hydrogen production unit (200) provided with a water electrolysis device (210) is disposed in the main body (100), and hydrogen can be produced by electrolyzing seawater using the water electrolysis device (210).

Accordingly, as illustrated in FIG. 2, by supplying hydrogen produced in the hydrogen production unit (200) to a ship (V) berthed to the main body (100), the ship (V) can be operated using hydrogen as fuel. As a result, inconvenience caused by a need for a general ship (V) to seek facilities such as ports for refueling during operation can be reduced.

At this time, ammonia and methanol, which will be described below, can be produced immediately through synthesis using the hydrogen produced in the hydrogen production unit (200). Accordingly, since it is not necessary to provide large-scale high-pressure tanks or cryogenic tanks for storing hydrogen, costs incurred in providing and operating such large-scale high-pressure tanks or cryogenic tanks can be reduced.

Next, the offshore platform (A) capable of producing, storing, and supplying carbon-neutral fuel while overcoming intermittency of renewable energy according to the present invention is capable of producing ammonia in particular.

That is, an ammonia production unit (300) provided with a first synthesis device (310) is disposed in the main body (100), and ammonia can be produced by synthesizing hydrogen flowing in from the hydrogen production unit (200) with nitrogen in air by the first synthesis device (310).

Accordingly, as illustrated in FIG. 3, by supplying the ammonia produced in the ammonia production unit (300) to a ship (V) berthed to the main body (100), the ship (V) can be operated using ammonia as fuel. As a result, inconvenience caused by a need for a general ship (V) to seek facilities such as ports for refueling during operation can be reduced.

Next, the offshore platform (A) capable of producing, storing, and supplying carbon-neutral fuel while overcoming intermittency of renewable energy according to the present invention is capable of producing methanol in particular.

That is, a methanol production unit (500) provided with a second synthesis device (510) is disposed in the main body (100), and methanol can be produced by synthesizing carbon dioxide flowing in from the carbon dioxide storage unit (400) with hydrogen flowing in from the hydrogen production unit (200) by the second synthesis device (510).

Accordingly, as illustrated in FIG.4, by supplying the methanol produced in the methanol production unit (500) to a ship (V) berthed to the main body (100), the ship (V) can be operated using methanol as fuel. As a result, inconvenience caused by a need for a general ship (V) to seek facilities such as ports for refueling during operation can be reduced.

Further, the offshore platform (A) capable of producing, storing, and supplying carbon-neutral fuel according to the present invention is capable of producing carbon-neutral fuel by utilizing renewable energy, and also overcoming intermittency inherent in renewable energy when renewable energy is utilized. A detailed description thereof will be provided below.

That is, as illustrated in FIG. 6, the present invention further includes a power supply unit (600) configured to supply power to each of the hydrogen production unit (200), the ammonia production unit (300), the carbon dioxide storage unit (400), and the methanol production unit (500). In this case, a power generation device (610) of the power supply unit (600) may be any one selected from a nuclear power generation device, a wind power generation device, and a solar power generation device, such that carbon-neutral fuel can be produced using renewable energy generated by wind power and solar power.

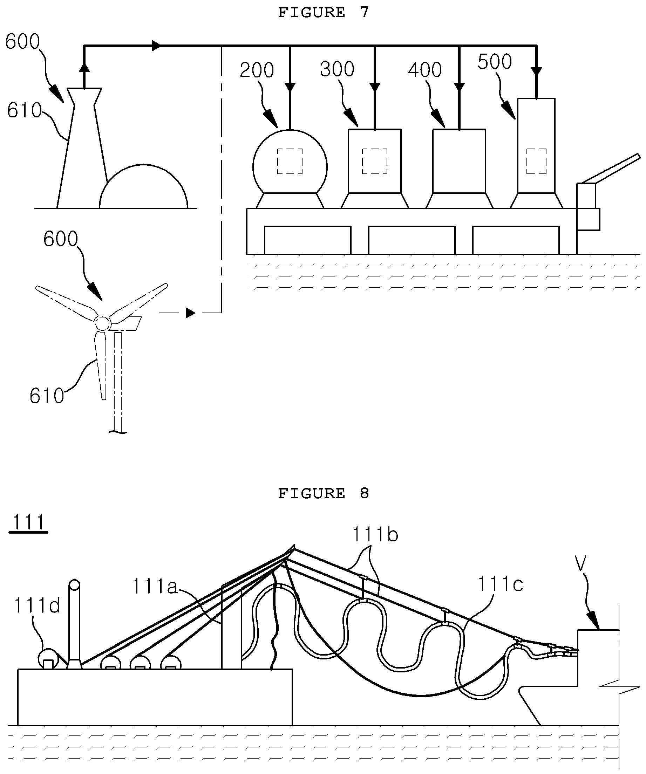

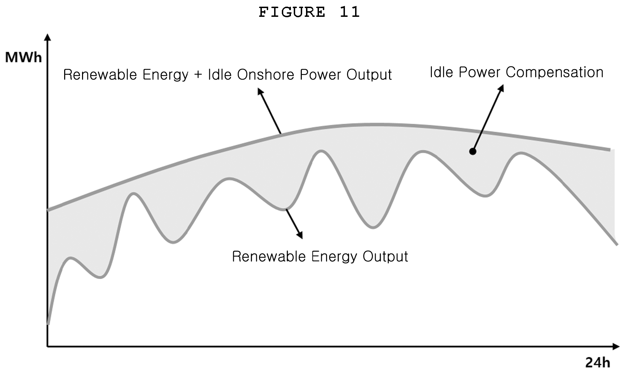

At this time, as illustrated in FIG. 7, the power supply unit (600) may be connected to a land-based power generation device (610). Accordingly, by supplying idle power from the land-based power generation device (610) to the hydrogen production unit (200), the ammonia production unit (300), and the methanol production unit (500) through the power supply unit (600), operation of the hydrogen production unit (200), the ammonia production unit (300), and the methanol production unit (500) can be performed. As a result, power supply can be performed in a more stable manner as compared to a case in which only renewable energy is used. Therefore, as illustrated in FIG. 11, intermittency inherent in renewable energy can be overcome, such that production of carbon-neutral fuel can be stably performed and production costs of carbon-neutral fuel can also be reduced.

Further, in the offshore platform (A) capable of producing, storing, and supplying carbon-neutral fuel while overcoming intermittency of renewable energy according to the present invention, any one of supply of hydrogen from the hydrogen production unit (200) to a ship (V), supply of ammonia from the ammonia production unit (300) to the ship (V), inflow of carbon dioxide from the ship (V) to the carbon dioxide storage unit (400), and supply of methanol from the methanol production unit (500) to the ship (V) can be stably performed.

That is, the berthing facility (110) of the present invention includes a connecting member (111) extending from any one of the hydrogen production unit (200), the ammonia production unit (300), the carbon dioxide storage unit (400), and the methanol production unit (500) to a ship (V). Accordingly, by means of the connecting member (111), any one of supply of hydrogen from the hydrogen production unit (200) to the ship (V), supply of ammonia from the ammonia production unit (300) to the ship (V), inflow of carbon dioxide from the ship (V) to the carbon dioxide storage unit (400), and supply of methanol from the methanol production unit (500) to the ship (V) can be performed.

At this time, as illustrated in FIG. 8, the connecting member (111) includes a support (111a) fixedly installed on the main body (100); a wire (111b) extending from the support (111a) to a ship (V); a hose (111c) slidably coupled to the wire (111b); and a tensioner (111d) configured to adjust tension of the wire (111b). Accordingly, by pushing or pulling the hose (111c) mounted on the wire (111b) to connect the hose (111c) between the ship (V) and the main body (100), any one of supply of hydrogen from the hydrogen production unit (200) to the ship (V), supply of ammonia from the ammonia production unit (300) to the ship (V), inflow of carbon dioxide from the ship (V) to the carbon dioxide storage unit (400), and supply of methanol from the methanol production unit (500) to the ship (V) can be stably performed.

In addition, the offshore platform (A) capable of producing, storing, and supplying carbon-neutral fuel while overcoming intermittency of renewable energy according to the present invention is capable of improving restoring stability.

That is, the main body (100) of the present invention may be configured as any one of a fixed offshore plant, a floating offshore plant, and a ship in the form of an FPSO (Floating Production Storage and Off-loading). The ship in the form of an FPSO may be a nuclear-powered ship comprising a reactor (120) configured to generate steam by thermal energy produced in a nuclear fission process, and a turbine (130) operatively connected to the reactor (120) and configured to rotate by impulse force and reaction force when impinged by the steam. The nuclear-powered ship may further comprise a gyrostabilizer (140), as illustrated in FIG. 9, in addition to the reactor (120) and the turbine (130). In particular, the turbine (130) is mounted on a spin axis (141) of the gyrostabilizer (140). Accordingly, rotational force of the turbine (130), which is rotated by steam generated in the reactor (120), is transmitted to the spin axis (141) of the gyrostabilizer (140), thereby causing a rotor (142) to rotate and perform precession. As a result, tilting of the main body (100) can be suppressed, and thus restoring stability of the main body (100) can be improved.

At this time, the gyrostabilizer (140) includes a generator (145) mounted on the spin axis (141). Accordingly, as the spin axis (141) and the rotor (142) are rotated by the turbine (130), operation of the generator (145) is performed, thereby enabling power generation. As a result, power supply within the ship (V) can also be smoothly performed.

The present invention as described above is not limited to the embodiments described herein, and various modifications and changes may be made without departing from the spirit and scope of the present invention as defined by the appended claims. Such modifications and changes shall fall within the scope of protection of the present invention as defined by the claims.

### [Explanation of Reference Numerals]

| | | | |
|---|---|---|---|
| 100: | main body | 101: | closed room |
| 102: | propulsion motor | 103: | switchboard |
| 104: | inverter/converter | 105: | propeller |
| 110: | berthing facility | 111: | connecting member |
| 111a: | support | 111b: | wire |
| 111c: | hose | 111d: | tensioners |
| 120: | reactor | 121: | shielding member |
| 121a: | alpha ray shielding layer | | |
| 121b: | beta ray shielding layer | | |
| 121c: | gamma ray shielding layer | | |
| 130: | turbine | | |
| 140: | gyrostabilizer | 141: | spin axis |
| 142: | rotor | 143: | gimbal |
| 144: | frame | 145: | generator |
| 146: | steam inlet line | 147: | power supply line |
| 200: | hydrogen production unit | | |
| 210: | water electrolysis device | | |
| 300: | ammonia production unit | | |
| 310: | first synthesis device | | |
| 400: | carbon dioxide storage unit | | |
| 500: | methanol production unit | | |
| 510: | second synthesis device | 600: | power supply unit |
| 610: | power generation device | A: | offshore platform |
| V: | ship | | |

### Industrial Applicability

The present invention enables production of carbon-neutral fuel by utilizing renewable energy together with idle power from land-based power generation devices and carbon dioxide captured from exhaust gases emitted from general ships, thereby overcoming instability in carbon-neutral fuel production caused by intermittency of renewable energy. In addition, the present invention makes it possible to reduce production costs of carbon-neutral fuel, reduce air pollution caused by greenhouse gas emissions from general ships, and facilitate smooth utilization of carbon dioxide captured during operation of general ships. Accordingly, the present invention has industrial applicability in industries related to manufacture and operation of offshore platforms.

## Claims

1. An offshore platform allowing carbon neutral fuel to be produced, stored and supplied, overcoming intermittency of renewable energy, the offshore platform comprising:
a main body located offshore;
a hydrogen production unit, disposed in the main body, for producing hydrogen via sea water electrolysis using a water electrolysis device and storing the hydrogen;
an ammonia production unit, disposed in the main body, for synthesizing, via a first synthesis device, the hydrogen flowing in from the hydrogen production unit with nitrogen in the air to produce ammonia and storing same;
a carbon dioxide storage unit, disposed in the main body, for storing carbon dioxide flowing in from the ship; and
a methanol production unit, disposed in the main body, for synthesizing, by means of a second synthesis device, the carbon dioxide flowing in from the carbon dioxide storage unit and hydrogen flowing in from the hydrogen production unit to produce methanol and storing same.

2. The offshore platform of claim 1, wherein the main body is configured as any one of a fixed offshore plant, a floating offshore plant, and a ship in the form of an FPSO (Floating Production Storage and Off-loading).

3. The offshore platform of claim 2, wherein the ship in the form of an FPSO (Floating Production Storage and Off-loading) is a nuclear-powered ship comprising: a reactor, disposed in a hull of the ship, for generating steam by thermal energy produced in a nuclear fission process; and a turbine, disposed in the hull and operatively connected to the reactor, the turbine being configured to rotate by impulse force and reaction force generated when the turbine is impinged by the steam.

4. The offshore platform of claim 1, wherein the main body comprises a berthing facility to which the ship is berthed.

5. The offshore platform of claim 4, wherein the berthing facility comprises a connecting member extending from any one of the hydrogen production unit, the ammonia production unit, the carbon dioxide storage unit, and the methanol production unit to the ship.

6. The offshore platform of claim 5, wherein the connecting member comprises: a support fixedly installed on the main body; a wire extending from the support to the ship; a hose slidably coupled to the wire; and a tensioner configured to adjust tension of the wire.

7. The offshore platform of claim 1, further comprising a power supply unit configured to supply power to each of the hydrogen production unit, the ammonia production unit, the carbon dioxide storage unit, and the methanol production unit.

8. The offshore platform of claim 7, wherein the power supply unit is configured to supply power produced by a power generation device disposed on the main body or disposed on land.

9. The offshore platform of claim 8, wherein the power generation device is any one selected from a nuclear power generation device, a wind power generation device, and a solar power generation device.
